# EUROPEAN PATENT SPECIFICATION

(11) **EP 2 876 119 B1**
(45) Date of publication and mention of the grant of the patent: **27.02.2019**
(21) Application number: 14803882.1
(22) Date of filing: 08.03.2014
(51) Int. Cl.: C08F 220/56, C08F 220/54, C08F 226/02, C08F 220/06, C08F 228/02, C09K 8/44, C09K 8/508, C09K 8/42

(54) **GEL, PLUGGING METHOD USING THE SAME, AND PLUGGING AND WELL-KILLING METHOD USING THE SAME**
GEL, LECKAGEDICHTUNGSVERFAHREN DAMIT UND BOHRLOCHTOTPUMPVERFAHREN DAMIT
GEL, PROCÉDÉ D'ARRÊT DES FUITES L'UTILISANT ET PROCÉDÉ D'ARRÊT DES FUITES ET DE L'ÉRUPTION D'UN PUITS L'UTILISANT

(30) Priority: 30.05.2013 CN 201310209528
(43) Date of publication of application: 27.05.2015
(73) Proprietor: Southwest Petroleum University, Chengdu, Sichuan 610500 (CN)
(72) Inventor: LUO, Pingya, Chengdu Sichuan 610500 (CN); GUO, Yongjun, Chengdu Sichuan 610500 (CN); WANG, Pingquan, Chengdu Sichuan 610500 (CN); ZHANG, Xinmin, Chengdu Sichuan 610500 (CN); FENG, Rusen, Chengdu Sichuan 610500 (CN)
(74) Representative: Hirsch & Associés
(86) International application number: PCT/CN2014/073091
(87) International publication number: WO 2014/190793

(56) References cited:
- EP-A1- 2 363 573
- CN-A- 1 793 189
- CN-A- 101 475 667
- CN-A- 102 358 771
- CN-A- 102 532 410
- CN-A- 102 532 410
- CN-A- 103 289 013
- US-A1- 2011 094 746
- Robert F Mitchell ET AL: "Petroleum Engineering Handbook, Volume 2 : Drilling Engineering" In: "Petroleum Engineering Handbook, Volume 2 : Drilling Engineering", 1 December 2007 (2007-12-01), Society of Petroleum Engineers, XP055232928, ISBN: 978-1-55563-114-7 page II-374, * page 374 *

## Description

### FIELD OF THE INVENTION

The present invention relates to the field of well drilling, in particular to a gel, and a plugging method using the same and a plugging and well-killing method using the same.

### BACKGROUND OF THE INVENTION

Well leakage refers to a phenomenon that in the presence of leakage zones like fractures or karst caves or the like in rocks, and when the pressure of the leakage zone is less than that of the drilling fluid column, the drilling fluid flows into the leakage zone to cause leakage under a positive differential pressure. After the well leakage occurs, the drilling fluid continuously leaks into the fractures or karst caves, thus failing to complete the circulation and leading to a phenomenon of "only-in-no-out", and in severe cases, there may be completely no working fluid returning from the wellhead, making drilling operations impossible to continue.

Blowout refers to a phenomenon that in the presence of fluid (oil, gas or water and the like) in the drilling formation and when the fluid pressure is greater than the pressure of the drilling fluid within the well, the fluid in the formation blows out from the surface.

Co-existence of well leakage and blowout refers to a phenomenon that in the presence of both fluid and leakage zones in the drilling formation, and when the leakage pressure of the leakage zone is less than the fluid pressure, the fluid flows into the leakage zone, causing an underground blowout and ground blowout.

To solve the well leakage problem, a plugging operation is required. In the drilling plugging operation, in general, a plugging material is transported to the leakage zone by transport equipment, and after the plugging material forms a barrier layer in the leakage zone, the subsequent drilling operation is continued. At present, a wide variety of plugging materials have been developed at home and abroad. Existing plugging materials mainly include cement materials such as ordinary cement slurry, gel cement slurry, diesel bentonite cement slurry and the like; granular bridging plugging materials such as walnut shells, rubber particles, perlite, raw shellfish, asphalt and the like; fibrous bridging plugging materials such as plant fibers, animal fibers; flaky bridging plugging materials such as mica sheet, cellophane and the like.

To solve the problem of the co-existence of well leakage and blowout, plugging and well-killing is required, that is, firstly, carrying out a plugging operation (being the same as the plugging operation in the above mentioned well leakage), then carrying out a well-killing operation, in which it is usually to inject killing fluid into the well and make the killing fluid circulate in the well to achieve a circulating well-killing. In the related art, in order to balance the formation fluid pressure, it is usually adopted heavy mud with high density as the killing fluid, that is, the killing fluid must be able to generate sufficiently high fluid column pressure.

However, with respect to the well leakage in wider fractures of formation leakage, as well as the co-existence of well leakage and blowout in which a leakage zone and a high pressure gas zone exists in the same well bore, the plugging materials in the related art cannot achieve plugging or plugging and well-killing successfully. The main reason is that: the existing plugging materials have a poor compression resistance, and when the killing fluid is injected, even though the high fluid column pressure generated from the killing fluid holds the high-pressure fluid down, the plugging material is diluted or dispersed under the high pressure of the killing fluid, and cannot exert a plugging effect in the leakage zone, thus repetitive leakage occurs. In severe cases, the killing fluid with a severe leakage fails to balance the fluid pressure, and thus a blowout occurs.

Document CN 102 532 410 A discloses a hydrophobic associated polymer, a preparation method and an application thereof. The hydrophobic associated polymer is obtained by uniformly mixing sodium acrylate, acrylamide, a hydrophobic monomer, a photo initiator and ethylene diamine tetraacetic acid in deionized water, performing reaction under illumination conditions, wherein the hydrophobic monomer is selected from at least one of hexadecyl allyl dimethyl ammonium chloride, tetradecyl allyl dimethyl ammonium chloride and dodecyl allyl dimethyl ammonium chloride. The polymer exhibits a good solubility and thickening property in water and can form a space grid structure in the solution, that is, forming a gel.

Document CN 101 475 667 A discloses a temperature- and salt-resistant gel, its preparation and its use as plugging in oil reservoirs. Embodiment 4 describes the synthesis of a polymer made of acrylamide, dimethyl diallyl ammonium chloride, octadecyl acrylate, N-dodecyl acrylamide and hexadecyl trimethylammonium bromide and the preparation of a gel of the thus obtained polymer.

### DISCLOSURE OF THE INVENTION

### Technical Problem

The present invention provides a gel, as well as a plugging method using the same and a plugging and well-killing method using the same, which is intended to solve the above problems.

### Solution to the Problem

### Technical Solution

The present invention provides a gel, which is formed by copolymerization of a hydrophobic monomer, a nonionic monomer and an olefinic acid salt monomer, wherein the introduction of an olefinic acid salt monomer allows the gel to get more excellent flowing property.

The method for preparing the gel provided by the present invention is copolymerization post-hydrolysis or copolymerization co-hydrolysis.

The method for preparing the gel by copolymerization post-hydrolysis as defined in claim 1, comprises steps as follows:
Firstly adding deionized water, hydrophobic monomer and nonionic monomer based on a feed ratio, adding olefinic acid salt monomer according to the flowing property requirement of the gel, stirring evenly to form monomer solution at a concentration of 10-40%, and bubbling nitrogen gas to remove oxygen, then controlling the monomer solution to a polymerization temperature, adding an initiator to proceed polymerization reaction, after the polymerization for 6-12 h, taking out the colloid for granulation, following by adding hydrolytic agent, selected from sodium hydroxide or sodium carbonate, for hydrolysis, and then drying, pulverizing and packaging, to obtain a gel sample;
the hydrophobic monomers are selected from alkyl dimethyl allyl ammonium chloride and N-alkyl acrylamide; the nonionic monomer is one or more of acrylamide, and methacrylamide; the olefinic acid salt monomer is one or more of sodium methacrylate, sodium vinyl sulfonate and sodium acrylate;
the ratio of the hydrophobic monomer, the nonionic monomer and the olefinic acid salt monomer is: 1-5 parts of the hydrophobic monomer, 70-90 parts of the nonionic monomer, and 5-20 parts of the olefinic acid salt monomer by amount of substance;
the time for bubbling nitrogen gas is 40-120 min;
the polymerization temperature is 5-50°C;
the initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine;
the initiator is added in an amount of 0.05-2% of the total mass of the hydrophobic monomer, the nonionic monomer and the olefinic acid salt monomer;
the hydrolytic agent, sodium hydroxide or sodium carbonate, is added in an amount of 5-15% of the total mass of the hydrophobic monomer, the nonionic monomer and the olefinic acid salt monomer;
the hydrolysis temperature is 80-110 °C, and the hydrolysis time is 2-4 h;
the drying temperature is 80-120°C, and the drying time is 1-4 h.
Further, the monomer solution has a concentration of 20-30%;
the time for bubbling nitrogen gas is 60-100 min;
the polymerization temperature is 10-30°C, and the polymerization time is 8-10 h;
the initiator is added in an amount of 0.1-0.5% of the total mass of the hydrophobic monomer, the nonionic monomer and the olefinic acid salt monomer;
the hydrolytic agent, sodium hydroxide or sodium carbonate, is added in an amount of 8-12% of the total mass of the hydrophobic monomer, the nonionic monomer and the olefinic acid salt monomer;
the hydrolysis temperature is 90-95 °C, and the hydrolysis time is 2.5-3 h;
the drying temperature is 100-110°C, and the drying time is 1.5-2 h.

Besides being prepared by the copolymerization post-hydrolysis, the gel of the present invention may also be prepared by using copolymerization co-hydrolysis, which does not need a separate hydrolysis operation, thus can both reduce production costs and save the production period. The method for preparing the gel by copolymerization co-hydrolysis, as defined in claim 3, comprises steps as follows:
firstly, adding deionized water, adding hydrophobic monomer and nonionic monomer based on a feed ratio, adding olefinic acid salt monomer according to the flowing property requirement of the gel, stirring evenly to form monomer solution at a concentration of 10-40%, then adding sodium hydroxide or sodium carbonate, and bubbling nitrogen gas to remove oxygen, then controlling the polymerization system to a polymerization temperature, adding an initiator to proceed polymerization reaction, after polymerization for 6-12 h, taking out of the colloid for granulation, and then drying, pulverizing and packaging, to obtain a gel sample;
the hydrophobic monomers are selected from alkyl dimethyl allyl ammonium chloride and N-alkyl acrylamide; the nonionic monomer is one or more of acrylamide, and methacrylamide; the olefinic acid salt monomer is one or more of sodium methacrylate, sodium vinyl sulfonate and sodium acrylate;
the ratio of the hydrophobic monomer, the nonionic monomer and the olefinic acid salt monomer is: 1-5 parts of the hydrophobic monomer, 70-90 parts of the nonionic monomer, and 5-20 parts of the olefinic acid salt monomer by amount of substance;
the sodium hydroxide or sodium carbonate is added in an amount of 5-15% of the total mass of the hydrophobic monomer, the nonionic monomer and the olefinic acid salt monomer;
the time for bubbling nitrogen gas is 40-120 min;
the polymerization temperature is 5-50°C;
the initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine;
the initiator is added in an amount of 0.05-2% of the total mass of the hydrophobic monomer, the nonionic monomer and the olefinic acid salt monomer;
the drying temperature is 80-120°C, and the drying time is 1-4 h.

Further, the monomer solution has a concentration of 20-30%;
the sodium hydroxide or sodium carbonate is added in an amount of 8-12% of the total mass of the hydrophobic monomer, the nonionic monomer and the olefinic acid salt monomer;
the time for bubbling nitrogen gas is 60-100 min;
the polymerization temperature is 10-30°C, and the polymerization time is 8-10 h;
the initiator is added in an amount of 0.1 to 0.5% of the total mass of the hydrophobic monomer, the nonionic monomer and the olefinic acid salt monomer;
the drying temperature is 100-110°C, and the drying time is 1.5-2 h.

Besides providing the gel preparation process as described above, the present invention also provides a method for plugging using the gel as described above, comprising the following steps:
step A: adding 8-18 g of the gel into 1 kg of water with stirring, to obtain a hydrogel;
step B: injecting the hydrogel into a leakage zone;
step C: injecting a spacer fluid into a well.

Further, after the step C, it further comprises: injecting quick-setting cement into the well.

Besides providing the gel preparation process as described above, the present invention also provides a method for plugging and well-killing using the gel as described above, comprising the following steps:
step 1: adding 8-18 g of the gel into 1 kg of water with stirring, to obtain a hydrogel;
step 2: injecting the hydrogel into a leakage zone;
step 3: injecting a spacer fluid into the well;
step 4: injecting heavy mud for killing into a well for circulation well-killing.

Further, after the step 4, it also comprises:
injecting quick-setting cement into the well.
Further, in the step 2, the injection rate of the hydrogel is equal to or greater than 4 m³/min;
and/or, in the step 4, the injection amount of the heavy mud for killing is 1.5-2 times of the annular volume within the well.

### Advantageous Effects of the Invention

### Advantageous Effects

Compared to the prior art, the gel provided by the present invention is a macromolecular polymer having hydrogen bonds and hydrophobic groups formed from binary copolymerization of a monomer containing a hydrophobic group and a carbon-carbon double bond and a nonionic monomer containing a carbon-carbon double bond, which polymer may have a molecular association with each other via an intramolecular hydrogen bond, intermolecular hydrogen bond and Vander Waals force between hydrophobic groups, etc. And this association makes the polymer have a high viscoelasticity, thereby possibly forming a gel barrier layer blocking the fractures or formation fluid from the killing fluid in a leakage zone; and it makes the polymer have a large intermolecular forces, that is a large cohesion, and is greater than the affinity between the polymer and water, thus being very difficult to be mixed with water and be diluted, and after the standing of the gel, the cohesion increases with time, thus a greater pressure is required to damage of the gel barrier layer, which is also greater than the pressure of the killing fluid, and therefore, the gel barrier layer will not be diluted or dispersed by the killing fluid. It follows that, the gel provided by the present invention has better compression resistance as compared to the prior art.

In addition, the present invention also provides a plugging method using the gel and a plugging and well-killing method using the gel, which is: injecting the gel into a leakage zone, then injecting heavy mud for killing, in which the gel is used for the plugging of the leakage zone to prevent leakage, and the heavy mud for killing is used for well killing. Meanwhile, because the gel can withstand the pressure of heavy mud for killing, the heavy mud for killing will not damage the barrier layer of the leakage zone, thereby allowing the plugging and well-killing to operate simultaneously. Similarly, the gel can also be used for the plugging in well leakage.

### BRIEF DESCRIPTION OF THE DRAWINGS

### Drawing Description

In order to illustrate specific embodiments of the present invention more clearly, the drawings used in the specific embodiments will be introduced briefly as follows. Apparently, the drawings described below are some embodiments of the present invention, and the ordinary skilled in the art can obtain other drawings from these drawings without inventive works.
FIG. 1 is a flow chart of a plugging method using the gel provided in an example of the invention;
FIG. 2 is a flow chart of a plugging and well-killing method using the gel of an example of the invention.

### EXAMPLES OF THE INVENTION

### Embodiments of the Invention

In order to make the objectives, technical solution, and advantages of the present invention more apparent, the technical solution of the present invention will be described clearly and completely below. All other examples which are obtained based on the specific examples of the present invention by those skilled in the art without inventive works, fall within the protection scope of the present invention.

### EXAMPLE 1: GEL

The example provides a gel, which was formed from copolymerization of a hydrophobic monomer and a nonionic monomer, or from copolymerization of a hydrophobic monomer, a nonionic monomer and an olefinic acid salt monomer.

### EXAMPLE 2: GEL PREPARATION 1 (Not according to the invention)

The example provides a method for preparing the above-mentioned gel using copolymerization post-hydrolysis, comprising steps as follows:
firstly, adding deionized water, adding hydrophobic monomer and nonionic monomer based on a feed ratio, stirring evenly to form a monomer solution at a certain concentration, and bubbling nitrogen gas to remove oxygen, then controlling the monomer solution to a polymerization temperature as required, adding an initiator to proceed polymerization reaction, and after the polymerization for a period of time, taking out the colloid for granulation, following by adding a hydrolytic agent, sodium hydroxide or sodium carbonate, for hydrolysis, and then drying, pulverizing and packaging, to obtain a gel sample.

The hydrophobic monomer is one or more of alkyl dimethyl allyl ammonium chloride and N-alkyl acrylamide; the nonionic monomer is one or more of acrylamide, methacrylamide, N-t-butyl acrylamide and N-isopropyl acrylamide.

The ratio of the addition amounts of the hydrophobic monomer and the nonionic monomer may be any ratio between 1-5:70-90 by amount of substance.

The monomer solution has a concentration of 10-40% (i.e. 10-40 g/100 mL), and further preferably 20-30%.

The time for bubbling nitrogen gas is 40-120 min, further preferably 60-100 min;

The polymerization temperature is 5-50°C, and further preferably 10-30°C.

The initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine.

The initiator has a concentration of 0.05-2% of the total mass of the hydrophobic monomer, the nonionic monomer and the olefinic acid salt monomer, and further preferably 0.1-0.5%.

The polymerization time is 6-12 h, and further preferably 8-10 h.

The hydrolytic agent, sodium hydroxide or sodium carbonate, is added in an amount of 5-15% of the total mass of hydrophobic monomer, the nonionic monomer and the olefinic acid salt monomer, and further preferably 8-12%;

The hydrolysis temperature is 80-110°C, and the hydrolysis time is 2-4 h, and further preferably the hydrolysis temperatures is 90-95 °C, and the hydrolysis time is 2.5-3 h;

The drying temperature is 80-120°C, and the drying time is 1-4 h, and further preferably the drying temperature is 100-110°C, and the drying time is 1.5-2 h.

### EXAMPLE 3. GEL PREPARATION 2 (Not according to the invention)

Besides being prepared by the copolymerization post-hydrolysis, the gel of the present invention may also be prepared using copolymerization co-hydrolysis, which does not need a separate hydrolysis operation, thus can both reduce production costs and save the production period. The method for preparing the gel by copolymerization-post-hydrolysis comprises the steps as follows:
firstly, adding deionized water, adding hydrophobic monomer and nonionic monomer based on a feed ratio, stirring evenly to form a monomer solution at a certain concentration, then adding an amount of sodium hydroxide or sodium carbonate, and bubbling nitrogen gas to remove oxygen, then controlling the polymerization system to a polymerization temperature as required, adding an initiator to proceed a polymerization reaction, after the polymerization for a period of time, taking out the colloid for granulation, and then drying, pulverizing and packaging, to obtain a gel sample.

The hydrophobic monomer is one or more of alkyl dimethyl allyl ammonium chloride and N-alkyl acrylamide; the nonionic monomer is one or more of acrylamide, methacrylamide, N-t-butyl acrylamide and N-isopropyl acrylamide.

The ratio of the addition amounts of the hydrophobic monomer and the nonionic monomer may be any ratio between 1-5:70-90 by amount of substance.

The monomer solution has a concentration of 10-40%, and further preferably 20-30%.

The sodium hydroxide or the sodium carbonate is added in an amount of 5-15% of the total mass of the hydrophobic monomer, the nonionic monomer and the olefinic acid salt monomer, and further preferably 8-12%.

The time for bubbling nitrogen gas is 40-120 min, and further preferably 60-100 min.

The polymerization temperature is 5-50°C, and further preferably 10-30°C.

The initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine.

The initiator has a concentration of 0.05-2% of the total mass of the hydrophobic monomer, the nonionic monomer, and the olefinic acid salt monomer, and further preferably 0.1-0.5%.

The polymerization time is 6-12h, and further preferably 8-10 h.

The drying temperature is 80-120°C, and the drying time is 1-4 h, and further preferably the drying temperature is 100-110°C, and the drying time is 1.5-2 h.

### EXAMPLE 4. GEL PREPARATION 3

In order to increase the flowability of the gel, it may be prepared by copolymerization of a hydrophobic monomer, a nonionic monomer and an olefinic acid salt monomer. The method for preparing the gel by the copolymerization post-hydrolysis comprises steps as follows:
firstly, adding deionized water, adding hydrophobic monomer, nonionic monomer and olefinic acid salt monomer based on a feed ratio, stirring evenly to form a monomer solution at a certain concentration, and bubbling nitrogen gas to remove oxygen, then controlling the monomer solution to a polymerization temperature as required, adding an initiator to proceed polymerization reaction, and after the polymerization for a period of time, taking out the colloid for granulation, following by adding a hydrolytic agent, sodium hydroxide or sodium carbonate, for hydrolysis, and then drying, pulverizing and packaging, to obtain a gel sample.

The hydrophobic monomer is one or more of alkyl dimethyl allyl ammonium chloride and N-alkyl acrylamide; the nonionic monomer is one or more of acrylamide, methacrylamide, N-t-butyl acrylamide and N-isopropyl acrylamide; and the olefinic acid salt monomer is one or more of sodium methacrylate, sodium vinyl sulfonate and sodium acrylate.

The ratio of the hydrophobic monomer, the nonionic monomer and the olefinic acid salt is: 1-5 parts of the hydrophobic monomer, 70-90 parts of the nonionic monomer, and 5-20 parts of the olefinic acid monomer by amount of substance; and for the above three substances, any fraction within the range of their parts may be employed to form a ratio of the three substances.

The monomer solution has a concentration of 10-40%, and further preferably 20-30%.

The time for bubbling nitrogen gas is 40-120 min, and further preferably 60-100 min.

The polymerization temperature is 5-50°C, and further preferably 10-30°C.

The initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine.

The initiator has a concentration of 0.05-2% of the total mass of the hydrophobic monomer, the nonionic monomer and the olefinic acid salt monomer, and further preferably 0.1-0.5%;
The polymerization time is 6-12 h, and further preferably 8-10 h;
The hydrolytic agent, sodium hydroxide or sodium carbonate, is added in an amount of 5-15% of the total mass of the hydrophobic monomer, the nonionic monomer and the olefinic acid salt monomer, and further preferably 8-12%;
The hydrolysis temperature is 80-110°C, and the hydrolysis time is 2-4 h, and further preferably the hydrolysis temperature is 90-95 °C, and the hydrolysis time is 2.5-3 h;
The drying temperature is 80-120°C, and the drying time is 1-4 h, and further preferably the drying temperature is 100-110°C, and the drying time is 1.5-2 h.

### EXAMPLE 5. GEL PREPARATION 4

A gel with an excellent flowability may be also prepared using copolymerization co-hydrolysis, comprising steps as follows:

firstly, adding deionized water, adding hydrophobic monomer, nonionic monomer and olefinic acid salt monomer based on a feed ratio, stirring evenly to form a monomer solution at a certain concentration, then adding an amount of sodium hydroxide or sodium carbonate, and bubbling nitrogen gas to remove oxygen, then controlling the monomer solution to a polymerization temperature as required, adding an initiator to proceed polymerization reaction, and after the polymerization for a period of time, taking out the colloid for granulation, and then drying, pulverizing and packaging, to obtain a gel sample.

The hydrophobic monomer is one or more of alkyl dimethyl allyl ammonium chloride and N-alkyl acrylamide; the nonionic monomer is one or more of acrylamide, methacrylamide, N-t-butyl acrylamide and N-isopropyl acrylamide; and the olefinic acid salt monomer is one or more of sodium methacrylate, sodium vinyl sulfonate and sodium acrylate.

The ratio of the hydrophobic monomer, the nonionic monomer and the olefinic acid salt is: 1-5 parts of the hydrophobic monomer, 70-90 parts of the nonionic monomer, and 5-20 parts of the olefinic acid monomer by amount of substance; and for the above three substances, any fraction within the range of their parts may be employed to form a ratio of the three substances.

The monomer solution has a concentration of 10-40%, and further preferably 20-30%.

The sodium hydroxide or sodium carbonate is added in an amount of 5-15% of the total mass of the hydrophobic monomer, the nonionic monomer, and the olefinic acid salt monomer, and further preferably 8-12%.

The time for bubbling nitrogen gas is 40-120 min, and further preferably 60-100 min.

The polymerization temperature is 5-50°C, and further preferably 10-30°C.

The initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine.

The initiator has a concentration of 0.05-2% of the total mass of the hydrophobic monomer, the nonionic monomer, and the olefinic acid salt monomer, and further preferably 0.1-0.5%.

The polymerization time is 6-12 h, and further preferably 8-10 h.

The drying temperature is 80-120°C, and the drying time is 1-4 h, and further preferably the drying temperature is 100-110°C, and the drying time is 1.5-2 h.

The nitrogen gas used in the process as described above may preferably use high-purity nitrogen gas, which has a better effect.

### EXAMPLE 6 A METHOD FOR PLUGGING USING THE GEL

The gel as described above is a macromolecular polymer having hydrogen bonds and hydrophobic groups formed from binary copolymerization of a monomer containing a hydrophobic group and a carbon-carbon double bond and a nonionic monomer containing a carbon-carbon double bond, which polymer may have a molecular association with each other via an intramolecular hydrogen bond, intermolecular hydrogen bond and Van der Waals force between hydrophobic groups, etc.. And this association makes the polymer have a high viscoelasticity, thereby possibly forming a gel barrier layer blocking the fractures or formation fluid from the killing fluid in a leakage zone; and it makes the polymer have a large intermolecular forces, that is a large cohesion and is greater than the affinity between the polymer and water, thus being very difficult to be mixed with water and be diluted, and after the standing of the gel, the cohesion increases with time, thus a greater pressure is required to the damage of the gel barrier layer, which is also greater than the pressure of the killing fluid, and therefore, the gel barrier layer will not be diluted or dispersed by the killing fluid. It follows that, the present invention provides a gel which may be used for plugging in well leakage or plugging and well-killing in the co-existence of blowout and well leakage. The high pressure fluid layer generally refers to a fluid layer having a pressure more than 40 MPa. In addition, the gel may be mixed with materials like bridging particles, cement and the like, without affecting its properties per se; therefore, it may be also mixed with other materials when the leakage situation is not serious.

It can be seen that, compared to the existing plugging materials, the gel provided by the examples of the present invention has a high compression resistance, and when dealing with the well leakage in wider fractures of formation leakage, as well as the co-existence of blowout and well leakage in which a leakage zone and a high pressure gas zone exists in the same well bore, the application of the gel may reduce the rescue time, lower the construction risk and meanwhile lower the economic cost.

In practical applications, the two monomers comprised in the gel as described above may be selected from any eligible reagent; for example, the monomer containing a hydrophobic group and a carbon-carbon double bond may be one of alkyl dimethyl allyl ammonium chloride and N-alkyl acrylamide, or a combination thereof; and the nonionic monomer containing a carbon-carbon double bond may be: one of acrylamide, methacrylamide, N-t-butyl acrylamide, N-isopropyl acrylamide, or any combination thereof.

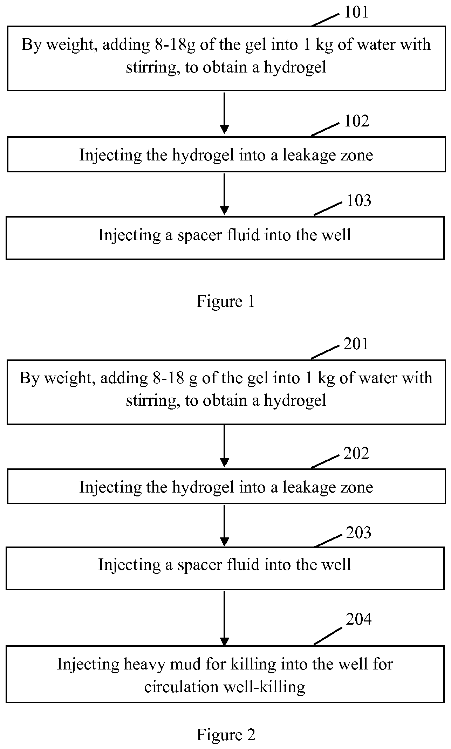

As shown in Fig.1, a method for plugging using the gel as described above comprises the following steps:
step 101: by weight, adding 8-18g of the gel into 1 kg of water with stirring, to obtain a hydrogel;
step 102: injecting the hydrogel into a leakage zone;
step 103: injecting a spacer fluid into the well.

The concentration of the gel in the step 101 as described above is very important, which directly affects the viscosity of the hydrogel, and through several experiments, the optimal mass ratio of the gel to water is 8 g:1 kg-18 g:1 kg, at which the viscosity may reach 30000-60000 mPa·s. Within this range the gel can ensure the viscosity as required for plugging, and also have certain pumpability. In practical applications, it may be adjusted as desired. Stirring may be performed during the formulation, and after stirring for 1 hour, the dissolution of gel dry powder forming a gel is observed, with no insoluble substance in the gel with visual inspection. When no insoluble substance is observed (the time of formulating with fresh water is generally no more than 2 hours), a sample is taken to determine its viscosity until it reaches 30000-60000 mPa·s. If the viscosity < 30000 mPa·s, it is necessary to increase the gel concentration unitl the gel viscosity being >30000 mPa·s; or to remake the experiment by changing another gel dry powder. At this time the concentration used may be recorded as a basis for formulation on site; with recording the dissolution time used, the time used for formulation on site is added with 0.5-1.0 hour based on this time, for later reference. Meanwhile, it is also necessary to perform a contamination experiment on the formulated gel with killing fluid and cement slurry.

The gel injected in the step 102 causes a slug (i.e. barrier) in a leakage zone, and may also form a barrier layer on the high-pressure gas layer or oil layer; and by adding the spacer fluid in the step 103, cross contamination of the gel and the fluids like the subsequent drilling fluid and the like is avoided. For the injections in the two steps of 102-103, an injection mode such as pipeline injection, casing pipe injection or pipeline-casing pipe injection may be selected based on actual requirement.

A method for plugging and well-killing using the gel as described above, as shown in Figure 2, comprises the following steps:
step 201: by weight, adding 8-18 g of the gel into 1 kg of water with stirring, to obtain a hydrogel;
step 202: injecting the hydrogel into a leakage zone;
step 203: injecting a spacer fluid into the well;
step 204: injecting heavy mud for killing into the well for circulation well-killing.

In this process, the step 204 is added on the basis of the method for plugging as described above. In the final step 204, heavy mud for killing is injected into the well for circulation well-killing until the required pressure within the well is reached, and then a normal drilling exploration or development operation may be proceeded. Wherein, as the spacer fluid, water is preferably used, which is readily available and has a lower cost. For the injections in the three steps of 202-204, an injection mode such as pipeline injection, casing pipe injection, pipeline-casing pipe injection, may be selected based on actual requirement.

In the step 201, the hydrogel may be formulated with a preparation tank with stirrers, such as a 40 m³ and 35 m³ tank provided with two stirrers, a 60 m³ tank provided with 3 stirrers. Moreover, all the stirrers must be guaranteed to operate normally; the tank for gel formulation must be cleaned up with removing rust; the tank is equipped with a submersible pump or screw pump or sand pump. When using multiple preparation tanks, the tanks are connected with each other through a pipeline above 10 inches; a dedicated cementing truck or fracturing truck is required for pumping the gel, of which the discharge capacity should be preferably greater than 4m³/min. The cementing truck and/or fracturing truck are used for well-killing, the cementing truck or fracturing truck are connected with the preparation tanks through a pipeline above 6 inches.

Additionally, before the plugging and well-killing, geologic and drilling information of this well and the adjacent wells should be collected, including formation pressure, formation breakdown pressure, formation leakage, drilling fluid property, formation oil-gas-water display, configuration of drilling tools, standpipe pressure, casing pressure, blowout type and the like. Also, depending on the natural gas production, the leakage of the leakage zone, the position of the leakage zone and the gas zone, the target of sealing and well-killing, well bore configuration and condition of the pipe column within the well or the like, the gel concentration may be determined. And the gel should be extruded into the leakage formation in about 100 m³ (if the leakage rate is excessively high, it may increase by 30%-50%); and an amount with which the well bore is filled is maintained within the well bore. Commonly, the amount may be designed based on 100 m³ (1.0-1.5 times of the effective annular capacity within the well). While the density of the killing fluid is calculated based upon the shut-in standpipe pressure, casing pressure and the drilling fluid density over time; typically, the amount generally ranges from 1.5 to 2 times of the effective annular capacity.

The injection of the gel in step 102 and step 202: the gel has a high viscosity and a strong structural characteristic. In order to ensure successful pumping of the gel, a fluid supplying manner is recommended, in which: an outlet pipeline at the bottom of the preparation tank is directly connected to a water supplying pipe of a withdrawing pump of a pump truck or a fracturing truck, and the gel is withdrawn from the preparation tank into the well by the pump truck or fracturing truck. The connection pipeline for pumping the gel should be greater than or equal to 6 inches. Alternatively, the gel is poured from different preparation tanks into a pump truck or fracturing truck separately or simultaneously by one or several submersible pumps (screw pumps or sand pumps), and then injected into the well. Alternatively, an 4-5 m³ iron tank is used, of which the lower opening (one or more) has a size matched with the water supplying pipe of the pump truck or fracturing truck and is connected with it. In use, the tank is placed on a hob higher than the fracturing truck to serve as a transition tank for fluid supplying. When injecting the gel, the gel is poured from different preparation tanks into the transition tank for fluid supplying separately or simultaneously by one or several submersible pumps (screw pumps or sand pumps), and then injected into the well by the pump truck or fracturing truck.

For further illustrating the effects of the present invention, the present example also provides a test example.

### Preparation of hydrogel:

The water for preparation is added in each preparation tank as desired, and the amount of gel dry powder (Kg) added in the water of each tank is calculated according to the test concentration.

A screw pump (submersible pump or sand pump), of which the outlet end is placed on the feeding port, is mounted in each tank, to achieve a circulation within the tank.

With turning on the stirrer on the tank while opening the screw pump (submersible pump or sand pump) to form a circulation within the tank, gel dry powder is homogeneously poured to the outlet of the screw pump (submersible pump or sand pump), and the gel dry powder is scoured and dispersed with the water flow to be mixed with the water homogeneously. It is noted that the addition rate of the dry powder should be controlled to avoid the generation of insoluble agglomerates, and it is preferred to add all the desired amount of the gel dry powder within about half an hour. (Other "preparation processes for uniform feeding a polymer solution" may also be employed).

Stirring is kept and the screw pump (submersible pump or sand pump) is kept to continue the circulation within the tank during or after the feeding. The stirring time after the feeding is generally 2 hours (or as determined by the aforementioned experiment). Upon stirring until the dry powder is completely dissolved, it is observed and a sample is taken to determine the gel viscosity, which should give the same test results.

The gel can be used immediately once prepared, during which stirring cannot be stopped; and if it is not used for well-killing at once, the stirring may be discontinued. The formulated gel is allowed to stand for 1-2 days without affecting its application effect. It should be stirred for more than 20 minutes prior to use, to recover its flowability for use.

In the case of an existing instrument and connection manner, it is examined whether the prepared gel can supply fluid as desired and feed water normally, and whether the discharge capacity fulfills the requirement for the well-killing scheme.

If the pump cannot feed water normally, it would be necessary to adjust the instruments, pipelines, gates and the manner of the fluid supply and water feeding until fulfilling the requirement.

Tests can be performed with a short cycle of returning to the preparation tank from the cementing truck or fracturing truck.

### Preparations for construction:

The gel, killing fluid and cement slurry are prepared depending on the process requirements of the well-killing.

The cementing truck or fracturing truck is positioned and connected well.

Pipelines for supplying the killing fluid, water, gel liquid are connected to the cementing truck or fracturing truck.

A pressure test is performed on the pipelines and gates in accordance with the criterion.

### Pump injection of the gel:

With stirring, the gel in the preparation tank is in a flow state under stirring, to begin the pump injection (pipeline injection, casing pipe injection or pipeline-casing pipe injection is conducted depending on the process requirements of the well-killing).

The pump injection cannot be interrupted and stopped and the discharge capacity should be ensured. The stirrer cannot be stopped before the pump injection is completed.

### Injection of heavy mud for well-killing operation:

After the gel is injected followed by injecting 1-3 m³ clear water as a spacer fluid, the heavy mud for killing is injected immediately according to the requirements of the well-blocking and killing scheme, to achieve circulation of well-killing; the well-killing parameters (e.g. density, discharge capacity, killing fluid amount, initial setting time of the cement slurry, etc.) and the well-killing scheme are dependent on the circumstance above the well. The operation requirement is the same as the conventional well-killing operation of the high pressure natural gas well (in the case that the killing fluid is leak tight and not atomized).

### Injection of cement slurry for blocking or isolating operation:

After the gel is injected followed by injecting 1-3 m³ clear water as a spacer fluid, quick-setting cement slurry is injected immediately according to the requirements of the well-blocking and killing scheme, to form a cementing plug for sealing the leakage zone or/and gas zone, thereby achieving the blocking or isolation.

The cement slurry may also be injected for blocking or isolation after successful well-killing based upon the well-killing scheme.

During the later period of slurry displacement, the discharge capacity may be reduced to continue displacing the slurry until the cement slurry is solidified, with keeping down pressure within the drill pipe for waiting on cement setting.

When cement slurry is used for blocking or isolation, the circulation passage of the killing fluid must be maintained; and the top of the cement slurry must be replaced to a suitable location between the leakage zone and the gas zone.

During waiting on cement setting, a killing fluid may be poured into the annulus.

### EXAMPLE 7. METHOD FOR PLUGGINGAND WELL-KILLING USING THE GEL

For different situations, the gel prepared in the examples as described above is employed in different ways for plugging and well-killing in well drilling, specifically being as follows:

### The first situation

If the leakage rate in a leakage zone is not too large, the leakage zone pressure is not much different from the fluid zone pressure (such as less than 2 MPa), and the natural gas is free of H₂S, the process as follows may be employed:

After injecting an amount of the gel as designed, injecting a spacer fluid and then establishing a circulation with injecting a killing fluid; and upon completion of the circulation well-killing, carrying out other operations.

### The second situation

If the leakage rate in a leakage zone is large, the leakage zone pressure is much different from the fluid zone pressure, and high content of H₂S is contained in the natural gas; or in other complex ground environments, the following process may be best employed:

After injecting an amount of gel as designed, injecting a spacer fluid and then injecting cement to drill a cementing plug so as to directly seal the gas zone; and after injecting the spacer fluid, establishing a circulation with injecting a killing fluid, and carrying out other operations upon completion of the circulation well-killing. Based on the well depth, down-hole temperature, pressure, location and length of the sealing section, performance of the heavy mud for killing, operation time for well-killing, etc., the performance and amount of the mud is determined. Water and the like can be used as the spacer fluid.

The killing fluid and the discharge capacity of the mud (if possible, it should be as large as possible) are controlled based upon the blowout type and the well-killing process. It is to be additionally noted that the casing pressure is controlled to a pressure less than the maximum allowable shut-in casing pressure. The operation way of plugging and well-killing such as pipeline injection or casing pipe injection or pipeline-casing pipe injection is determined based upon the well condition and the well-killing purpose. When cement slurry is used for blocking or isolation, it is suitable to discontinue the mud displacement after the initial setting of the cement slurry. When cement slurry is used for blocking or isolation, circulation passage of the killing fluid must be maintained; and the top of the cement slurry must be replaced to a suitable location between the leakage zone and the gas zone. After completion of construction, the pressure should be kept down within the drilling tool; if the liquid level of the annulus is relatively low, killing fluid may be injected or continuously poured into the annulus.

In order to further illustrate that the gel has good property of plugging and well-killing, two test examples are further provided by the present example:

### TEST EXAMPLE 1

### Accident conditions:

Luojia-2 well is an exploratory well in Luojiazhai gas field, with a well depth of 3404 m, which has an open-flow capacity of 265 × 104 m³/d and test production of 63 × 104 m³/d. In March 2006, in the second well completion, a casing rupture in the well occurred, and the natural gas containing high amounts of H₂S in bottom-hole was leaked from annulus outside the casing of Luojia water injection-1 well to the ground through faults, with the natural gas containing H₂S causing a very complicated situation of the Luojia-2 well, which has become a rare problem for well-killing and plugging, (1) Blowout and leakage were present in the same well section. The center to center distance between the wellheads of Luojia-2 well and Luojia water injection-1 well was 2.52 m, the distance of wellbore is 124.29 m at a vertical depth of 2180 m. When drilling to the Jia fifth section, tens of thousands cubic meters of various fluids were leaked from both of the Luojia-2 well and Luojia water injection-1 well. The casing of the Luojia-2 well had a larger well deviation in the formation of the Jia fifth section, with the internal wall being seriously worn by the drilling tool; and after finishing drilling, Luojia water injection-1 well performed a perforation and 30 m³ of acidizing operation one time on this zone. In Luojia-2 well, a casing rupture occurred, with the killing fluid and bottom-hole gas entering into the leakage zone through this crevice, and the blowout and leakage occurred in the same formation, making the well-killing and plugging problematic. The gas leaked out from the ground along the shallower fault of the annulus outside the casing of Luojia water injection-1 well over time, which further complicated the ground condition. (2) The gas zone of Feixianguan Formation in the bottom-hole had an extremely large gas production. The gas zone of Feixianguan Formation in the bottom-hole had an open flow capacity up to 265 × 104 m³/d, and under the crevice of the casing there was almost pure gas column, failing to establish a fluid column pressure, thus the high pressure gas entered into the crevice to blow off the plugging materials into atomization and then carry them away, which made the plugging materials very difficult to restack in the vicinity of the crevice. (3) The leakage zone was fractured with the fractures extending in all directions, which was a "bottomless pit". (4) A substantial amount of water was contained in the leakage zone. Before the second well-completion operation of the Luojia-2 well, the well depth for the liquid level of clear water was measured to be 158 m and the bottom-hole pressure in the Jia fifth section (238-2223 m) was around 19.82 MPa for the Luojia water injection-1 well. A significant amount of water contained in the formation caused that 3H plugging slurry, bridge-plugging plugging slurry and cement slurry could not re-agglomerate after blown off by the high pressure air flow, which would be diluted and flowed away failing to stack a structure in the vicinity of the crevice, and this was the principal cause that failed the plugging for four times on previous period. (5) Down-hole fish was extremely disadvantageous to the plugging. When implementing the scheme of placing down the packer for blocking, due to the hydrogen embrittlement fracture of the drilling tool, the designing scheme of placing packers down into the Luojia-2 well for blocking cannot be implemented continuously. The fish had a length of 525 m, and at its bottom had an A177.8 mm pipe scraper, with the gap between it and casing being only a few millimeters. The injection of the bridge-plugging slurry was extremely susceptible to be blocked off in such a small gap; thus the employment of the scheme of bridge-plugging slurry was not feasible, which increased the difficulty in plugging. The natural gas blowing out has a high content of H₂S. The natural gas in down-hole had a H₂S content of 125.53 g/m³, and the H₂S content in the air at the leakage ground gradually increased from zero up to 9.8 mg/m³. Gas with high H₂S content was extremely easy to corrode the drilling tool; the longer the time was, the more complicated the status of the drilling tool in down-hole was, and the more dangerous the wellhead was.

### Plugging and well-killing using the gel of the present invention:

235 m³ of the gel of the present invention with a mass concentration of 1.5% (with large discharge capacity and a high dose) was used, to slow down the upward velocity of the fluid (gas), reduce the leakage-off rate and increase the flowing resistance of the plugging agent. 67.5 m³ of cement slurry was casing pipe injected, followed by shutting in the well for waiting on cement setting. Both of the casing pressure and standpipe pressure were 0. The flame at the blowout nozzle of the Luojia water injection-1 well was decreased continuously, which presented a fluctuation from an unstable state to discontinuous extinguishment, and the fire behavior at the leakage point on the ground was likewise significantly reduced, to achieve generally successful blocking. 185 m³ of the gel was injected into the annulus and 86 m³ of cement slurry was also injected into annulus for blocking the gas zone of the Feixianguan Formation, with the standpipe pressure and the casing pressure being 0. The well was shut-in for waiting on cement setting. Observations have been made continuously, by which the wellhead pressure was 0 for the Luojia-2 well. It has been demonstrated that the gas zone of the Feixianguan Formation had been completely cut off, and the rescue task for well-killing and blocking was basically completed, which successfully completed the plugging and well-killing operations for the Luojia-2 well.

### TEST EXAMPLE 2

### Accident conditions:

Dazhou ShuangMiao-1 well is a vertical exploratory well from South Company, Sinopec located in east Sichuan, of which the designed depth is 4373 m. It was drilled to 3573 m, with an open hole section at 1622 m, and the drill in the open hole section encountered 6 leakage zones, in which 3 leakages were of a loss-return type and serious; and when drilling to 3446-3448 m, the drill encountered a down-hole overflow in the high pressure gas zone (the pressure coefficient of the gas zone was between 1.71 and 1.88 g/cm³, the open flow capacity was 60 × 104 m³/d in a preliminary test). 1.79-1.80 g/cm³ of high density drilling fluid was used for well-killing; while due to the pressure coefficient of the gas zone being about 1.88 g/cm³, the formation of this gas zone only had a loading capacity of 1.81 g/cm³, which was lower than that of the upper formation, and the gas zone was leaked during the well-killing. Under overpressure, the original fracture of the gas zone became wider and had a better connectivity, resulting in serious leakage in a loss-return type and forming a complicated leakage situation with blowout and leakage present in the same zone. For the purposes of blocking the leakage zone and protecting the gas zone, field technicians had successively adopted bridge-plugging for blocking (of which the maximum particle size was up to 3 cm), cementing for plugging for 9 times, as well as a combined plugging process of bridge-plugging plugging and cementing; however, they all had no effect, and the phenomenon of the co-existence of blowout and leakage failed to be controlled. Overflowing of the high pressure gas zone and the well leakage cannot be controlled effectively for long time, which would severely threat the well wall stabilization in the upper formation. Since the well leakage in the high pressure gas zone lowered the liquid level of the annulus within the well, the fluid column pressure for balancing the upper formation was reduced, causing that the bridge plug for blocking the leakage zone in the upper formation was largely anti-spitted, and the leakage occurred again in the original upper formation; and when the casing pressure was relatively high, there would be a situation in which the lower high pressure gas entered into the upper leakage zone causing underground blowout. The anti-spitted bridge-plugging plugging material from the upper leakage zone was deposited in the annular borehole, resulting in jamming of a drilling tool, and during the initial stages of jamming of the drilling tool, the rotor position could move up and down in approximately 100 m (3573-3484 m). However, due to the long soaking time of the borehole, the minerals of the mud shale in this area were mainly dominated by illite/smectite disordered interlayers, in which there was a relatively high content of the smectite which had a serious hydrous swelling, and due to the scouring to the borehole wall caused by the slippage and rising of the high pressure gas, part of the borehole wall was caused to collapse, finally jamming the drill bit, with the sticking points being 2500m and 3474m, respectively. After the drill bit was jammed, multiple cementings were employed for blocking successively, all of which failed to effectively control the overflowing and well leakage of the lower high pressure gas zone. In this case, the double ram type preventer at the wellhead was under a high pressure operation state for a longer period of time, and the lower ram due to the scouring and striking with solid particles carried by the high pressure gas, failed to pierce effectively, severely threating the wellhead security, and forming a multiple-pressure system of the high-pressure gas well and multiple leakage zones, accompanied with blowout-leakage of the high pressure gas zone in the same formation and underground blowout from a high pressure zone to a low pressure zone, thus to cause a complex well condition of jamming the drilling tool and the piercing of the blowout preventer components.

### The method for plugging and well-killing using the gel of the present invention:

Firstly, 4 m³ of a particular gel with a concentration was pipeline injected into a drilling tool with a fracturing truck, and then 34 m³ of a high density drilling fluid was pipeline injected into the drilling tool using a drilling pump instead, with ensuring the water hole open. 60 m³ of a high density drilling fluid was reverse extruded through kill manifolds to the annulus with a fracturing truck, with the discharge capacity changing from small to big, and the casing pressure was controlled to be less than or equal to 18 MPa. The high pressure fluid in the annulus was extruded back to the production zone or leakage zone. The standpipe pressure and the casing pressure were observed; after the casing pressure was reduced to zero, the reverse extrusion was stopped, and during the pressure reduction, the high density drilling fluid was continuously replenished to the mud tank in the well field by the drilling pump. 40 m³ of a particular gel was injected from the drilling tool, since the density of the particular gel was only 1.01 g/cm³, in order to prevent the excessive construction pressure caused by the excessive differential pressure, 40 m³ of the gel with a concentration of 1.0% was injected by the fracturing truck in two batches, between which 10 m³ of a high density drilling fluid (1.95 g/cm³) was injected. During the injection and displacement, the pump pressure change was observed, to control the pump pressure less than or equal to 25 MPa. 25 m³ of quick-setting cement slurry which had a density great than or equal to 1.85 g/cm³ was injected from a drilling tool, and during the injection, the pump pressure change was observed, to control the pump pressure less than 25 MPa. 33 m³ of a high density drilling fluid was injected from the drilling tool for displacement. The well was shut-in for waiting on cement setting, to make the gel achieve its intensity and the cement slurry set. After 24 h of waiting on setting of the cement slurry, after pressure relief of the standpipe pressure, casing pressure, the standpipe pressure was 0, achieving the purpose of isolating the annulus (successful isolation), and cutting off the high pressure gas zone in the down-hole.

It can be seen that, the gel and the preparation processes thereof, as well as a method for plugging and well-killing in well drilling using the same provided by the present invention, are capable of dealing with the complex leakage and blowout accidents in the oil and natural gas wells.

Finally it should be noted that the above examples are merely for illustrating the technical solution of the present invention and are not intended to limit the present invention.

## Claims

1. A gel, **characterized in that** the gel is formed from copolymerization of more than one hydrophobic monomer, a nonionic monomer and an olefinic acid salt monomer,
the gel being prepared by the steps of: firstly adding deionized water, adding the hydrophobic monomers and the nonionic monomer based on a feed ratio, adding the olefinic acid salt monomer, stirring evenly to form a mixture at a concentration of 10% to 40% (10-40 g/100 mL), and bubbling nitrogen gas to remove oxygen, then controlling the mixture to a polymerization temperature, adding an initiator to proceed polymerization reaction, after the polymerization for 6-12 h, taking out the colloid for granulation, following by adding a hydrolytic agent selected from sodium hydroxide and sodium carbonate, for hydrolysis, and then drying, pulverizing and packaging, to obtain a gel sample;
wherein the hydrophobic monomers are selected from alkyl dimethyl allyl ammonium chloride and N-alkyl acrylamide; the nonionic monomer is one or more of acrylamide, methacrylamide; and the olefinic acid salt monomer is one or more of sodium methacrylate, sodium vinyl sulfonate and sodium acrylate;
wherein the ratio of the hydrophobic monomers, the nonionic monomer and the olefinic acid salt monomer is: 1-5 parts of the hydrophobic monomers, 70-90 parts of the nonionic monomer, and 5-20 parts of the olefinic acid salt monomer by amount of substance;
the time for bubbling nitrogen gas is 40-120 min;
the polymerization temperature is 5-50°C;
the initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine;
the initiator is added in an amount of 0.05% to 2% of the total mass of the hydrophobic monomers, the nonionic monomer and the olefinic acid salt monomer;
the hydrolytic agent selected from sodium hydroxide and sodium carbonate, is added in an amount of 5% to 15% of the total mass of the hydrophobic monomers, the nonionic monomer and the olefinic acid salt monomer;
the hydrolysis temperature is 80-110 °C, and the hydrolysis time is 2-4 h;
the drying temperature is 80-120°C, and the drying time is 1-4 h.

2. The gel according to claim 1, **characterized in that** the mixture has a concentration of 20% to 30%, (20-30 g/100 mL);
the time for bubbling nitrogen gas is 60-100 min;
the polymerization temperature is 10-30°C; and the polymerization time is 8-10 h;
the initiator is added in an amount of 0.1% to 0.5% of the total mass of the hydrophobic monomers, the nonionic monomer and the olefinic acid salt monomer;
the hydrolytic agent selected from sodium hydroxide and sodium carbonate, is added in an amount of 8-12% of the total mass of the hydrophobic monomers, the nonionic monomer and the olefinic acid salt monomer;
the hydrolysis temperature is 90-95 °C, and the hydrolysis time is 2.5-3 h;
the drying temperature is 100-110°C, and the drying time is 1.5-2 h.

3. A gel **characterized in that** the gel is formed from copolymerization of more than one hydrophobic monomer, a nonionic monomer and an olefinic acid salt monomer, the gel being prepared by the steps of: firstly adding deionized water, adding the hydrophobic monomers and the nonionic monomer based on a feed ratio, adding the olefinic acid salt monomer, stirring evenly to form a mixture at a concentration of 10% to 40% (10-40 g/100 mL), then adding sodium hydroxide or sodium carbonate, and bubbling nitrogen gas to remove oxygen, then controlling the polymerization system to a polymerization temperature, adding an initiator to proceed polymerization reaction, after the polymerization for 6-12 h, taking out the colloid for granulation, and then drying, pulverizing and packaging, to obtain a gel sample;
wherein the hydrophobic monomers are selected from alkyl dimethyl allyl ammonium chloride and N-alkyl acrylamide; the nonionic monomer is one or more of acrylamide, methacrylamide; and the olefinic acid salt monomer is one or more of sodium methacrylate, sodium vinyl sulfonate and sodium acrylate;
wherein the ratio of the hydrophobic monomers, the nonionic monomer and the olefinic acid salt monomer is: 1-5 parts of the hydrophobic monomers, 70-90 parts of the nonionic monomer, and 5-20 parts of the olefinic acid salt monomer by amount of substance;
the time for bubbling nitrogen gas is 40-120 min;
the polymerization temperature is 5-50°C;
the initiator is a redox initiator, wherein the oxidizing agent is one or more of potassium persulfate, ammonium persulfate and sodium persulfate; and the reducing agent is one or more of sodium sulfite, sodium bisulfite, urea and triethanolamine;
the initiator is added in an amount of 0.05 to 2% of the total mass of the hydrophobic monomers, the nonionic monomer and the olefinic acid salt monomer;
the drying temperature is 80-120°C, and the drying time is 1-4 h.

4. The gel according to claim 3, wherein the mixture has a concentration of 20% to 30% (20-30 g/100 mL);
the sodium hydroxide or sodium carbonate is added in an amount of 8% to 12% of the total mass of the hydrophobic monomers, the nonionic monomer and the olefinic acid salt monomer;
the time for bubbling nitrogen gas is 60-100 min;
the polymerization temperature is 10-30°C; and the polymerization time is 8-10 h;
the initiator is added in an amount of 0.1% to 0.5% of the total mass of the hydrophobic monomers, the nonionic monomer and the olefinic acid salt monomer;
the drying temperature is 100-110°C, and the drying time is 1.5-2 h.

5. A method for plugging using the gel according to any one of claims 1-4, **characterized in that** it comprises the following steps:
Step A: adding 8-18 g of the gel into 1 kg of water with stirring, to obtain a hydrogel;
Step B: injecting the hydrogel into a leakage zone;
Step C: injecting a spacer fluid into a well.

6. The method for plugging using the gel according to claim 5, **characterized in that**, after the step C, it further comprises:
injecting a quick-setting cement into the well.

7. A method for plugging and well-killing using the gel according to any one of claims 1-4, **characterized in that** it comprises the following steps:
Step 1: adding 8-18 g of the gel into 1 kg of water with stirring, to obtain a hydrogel;
Step 2: injecting the hydrogel into a leakage zone;
Step 3: injecting a spacer fluid into a well;
Step 4: injecting a heavy mud for killing into the well for circulation well-killing.

8. The method for plugging and well-killing using the gel according to claim 7, **characterized in that**, after the step 4, it further comprises:
injecting a quick-setting cement into the well.

9. The method for plugging and well-killing using the gel according to claim 7, **characterized in that**, in the step 2, the injection rate of the hydrogel is equal to or greater than 4 m³/min.

10. The method for plugging and well-killing using the gel according to claim 7, **characterized in that** the injection amount of the heavy mud for killing in step 4 is 1.5-2 times of the annular volume within the well.

## Patentansprüche

1. Gel, **dadurch gekennzeichnet, dass** das Gel durch Copolymerisation von mehr als einem hydrophoben Monomer, einem nichtionischen Monomer und einem olefinischen Säuresalzmonomer gebildet wird,
wobei das Gel gebildet wird durch die Schritte:
- zunächst Hinzufügen von deionisiertem Wasser,
- Hinzufügen der hydrophoben Monomere und des nichtionischen Monomers basierend auf einem Zuführungsverhältnis,
- Hinzufügen des olefinischen Säuresalzmonomers,
- gleichmäßiges Rühren, um eine Mischung bei einer Konzentration von 10% bis 40% (10 bis 40g/100 mℓ) zu bilden und
- Durchperlen von Stickstoffgas, um Sauerstoff zu entfernen,
- danach Regelung der Mischung auf eine Polymerisationstemperatur,
- Hinzufügen eines Initiators, um die Polymerisationsreaktion fortzuführen,
- nach der Polymerisation für 6 bis 12 Std., Herausnehmen des Kolloids zur Granulierung,
- gefolgt durch das Hinzufügen eines Hydrolysemittels, das ausgewählt ist aus Natriumhydroxid und Natriumcarbonat, zur Hydrolyse und
- anschließend Trocknen, Pulverisieren und Verpacken, um eine Gelprobe zu erhalten;
∘ wobei die hydrophoben Monomere ausgewählt sind aus Alkyldimethylallylammoniumchlorid und N-Alkylacrylamid; das nichtionische Monomer eines oder mehrere von Acrylamid, Methacrylamid ist; und das olefinische Säuresalzmonomer eines oder mehrere von Natriummethacrylat, Natriumvinylsulfonat und Natriumacrylat ist;
∘ wobei das Verhältnis der hydrophoben Monomere, des nichtionischen Monomers und des olefinischen Säuresalzmonomers beträgt: 1 bis 5 Teile der hydrophoben Monomere, 70 bis 90 Teile des nichtionischen Monomers und 5 bis 20 Teile des olefinischen Säuresalzmonomers bezogen auf die Menge der Substanz;
- die Zeit für das Durchperlen von Stickstoffgas 40 bis 120 min beträgt;
- die Polymerisationstemperatur 5 bis 50°C beträgt;
- der Initiator ein Redox-Initiator ist, wobei das Oxidationsmittel eines oder mehrere von Kaliumpersulfat, Ammoniumpersulfat und Natriumpersulfat ist; und das Reduktionsmittel eines oder mehrere von Natriumsulfit, Natriumbisulfit, Harnstoff und Triethanolamin ist;
- der Initiator in einer Menge von 0,05% bis 2% der Gesamtmasse der hydrophoben Monomere, des nichtionischen Monomers und des olefinischen Säuresalzmonomers hinzugefügt wird;
- das Hydrolysemittel, das ausgewählt ist aus Natriumhydroxid und Natriumcarbonat, in einer Menge von 5% bis 15% der Gesamtmasse der hydrophoben Monomere, des nichtionischen Monomers und des olefinischen Säuresalzmonomers hinzugefügt wird;
- die Hydrolysetemperatur 80 bis 110°C und die Hydrolysezeit 2 bis 4 Std. beträgt;
- die Trocknungstemperatur 80 bis 120°C und die Trocknungszeit 1 bis 4 Std. beträgt.

2. Gel nach Anspruch 1, **dadurch gekennzeichnet, dass** die Mischung eine Konzentration von 20% bis 30% (20 bis 30g/100 mℓ) aufweist;
- die Zeit für das Durchperlen von Stickstoffgas 60 bis 100 min beträgt;
- die Polymerisationstemperatur 10 bis 30°C und die Polymerisationszeit 8 bis 10 Std. beträgt;
- der Initiator in einer Menge von 0,1% bis 0,5% der Gesamtmasse der hydrophoben Monomere, des nichtionischen Monomers und des olefinischen Säuresalzmonomers hinzugefügt wird;
- das Hydrolysemittel, das ausgewählt ist aus Natriumhydroxid und Natriumcarbonat, in einer Menge von 8% bis 12% der Gesamtmasse der hydrophoben Monomere, des nichtionischen Monomers und des olefinischen Säuresalzmonomers hinzugefügt wird;
- die Hydrolysetemperatur 90 bis 95°C und die Hydrolysezeit 2,5 bis 3 Std. beträgt;
- die Trocknungstemperatur 100 bis 110°C und die Trocknungszeit 1,5 bis 2 Std. beträgt.

3. Gel, **dadurch gekennzeichnet, dass** das Gel durch Copolymerisation von mehr als einem hydrophoben Monomer, einem nichtionischen Monomer und einem olefinischen Säuresalzmonomer gebildet wird, wobei das Gel gebildet wird durch die Schritte: zunächst Hinzufügen von deionisiertem Wasser, Hinzufügen der hydrophoben Monomere und des nichtionischen Monomers basierend auf einem Zuführungsverhältnis, Hinzufügen des olefinischen Säuresalzmonomers, gleichmäßiges Rühren, um eine Mischung bei einer Konzentration von 10% bis 40% (10 bis 40g/100 mℓ) zu bilden, danach Hinzufügen von Natriumhydroxid oder Natriumcarbonat, und Durchperlen von Stickstoffgas, um Sauerstoff zu entfernen, danach Regelung des Polymerisationssystems auf eine Polymerisationstemperatur, Hinzufügen eines Initiators, um die Polymerisationsreaktion fortzuführen, nach der Polymerisation für 6 bis 12 Std., Herausnehmen des Kolloids zur Granulierung und anschließendem Trocknen, Pulverisieren und Verpacken, um eine Gelprobe zu erhalten;
∘ wobei die hydrophoben Monomere ausgewählt sind aus Alkyldimethylallylammoniumchlorid und N-Alkylacrylamid; das nichtionische Monomer eines oder mehrere von Acrylamid, Methacrylamid ist; und das olefinische Säuresalzmonomer eines oder mehrere von Natriummethacrylat, Natriumvinylsulfonat und Natriumacrylat ist;
∘ wobei das Verhältnis der hydrophoben Monomere, des nichtionischen Monomers und des olefinischen Säuresalzmonomers beträgt: 1 bis 5 Teile der hydrophoben Monomere, 70 bis 90 Teile des nichtionischen Monomers und 5 bis 20 Teile des olefinischen Säuresalzmonomers bezogen auf die Menge der Substanz;
- die Zeit für das Durchperlen von Stickstoffgas 40 bis 120 min beträgt;
- die Polymerisationstemperatur 5 bis 50°C beträgt;
- der Initiator ein Redox-Initiator ist, wobei das Oxidationsmittel eines oder mehrere von Kaliumpersulfat, Ammoniumpersulfat und Natriumpersulfat ist; und das Reduktionsmittel eines oder mehrere von Natriumsulfit, Natriumbisulfit, Harnstoff und Triethanolamin ist;
- der Initiator in einer Menge von 0,05% bis 2% der Gesamtmasse der hydrophoben Monomere, des nichtionischen Monomers und des olefinischen Säuresalzmonomers hinzugefügt wird;
- die Trocknungstemperatur 80 bis 120°C und die Trocknungszeit 1 bis 4 Std. beträgt.

4. Gel nach Anspruch 3, wobei die Mischung eine Konzentration von 20% bis 30% (20 bis 30g/100 mℓ) aufweist;
- das Natriumhydroxid oder Natriumcarbonat in einer Menge von 8% bis 12% der Gesamtmasse der hydrophoben Monomere, des nichtionischen Monomers und des olefinischen Säuresalzmonomers hinzugefügt wird;
- die Zeit für das Durchperlen von Stickstoffgas 60 bis 100 min beträgt;
- die Polymerisationstemperatur 10 bis 30°C und die Polymerisationszeit 8 bis 10 Std. beträgt;
- der Initiator in einer Menge von 0,1% bis 0,5% der Gesamtmasse der hydrophoben Monomere, des nichtionischen Monomers und des olefinischen Säuresalzmonomers hinzugefügt wird;
- die Trocknungstemperatur 100 bis 110°C und die Trocknungszeit 1,5 bis 2 Std. beträgt.

5. Verfahren zum Verschließen unter Verwendung des Gels nach einem der Ansprüche 1 bis 4, **dadurch gekennzeichnet, dass** es die folgenden Schritte umfasst:
- Schritt A: Hinzufügen von 8 bis 18g des Gels zu 1 kg Wasser unter Rühren, um ein Hydrogel zu erhalten;
- Schritt B: Einspritzen des Hydrogels in einen Leckagebereich;
- Schritt C: Einspritzen einer Distanzflüssigkeit in ein Bohrloch.

6. Verfahren zum Verschließen unter Verwendung des Gels nach Anspruch 5, **dadurch gekennzeichnet, dass** es nach dem Schritt C weiterhin umfasst:
- Einspritzen eines schnell abbindenden Zements in das Bohrloch.

7. Verfahren zum Verschließen und Bohrlochtotpumpen unter Verwendung des Gels nach einem der Ansprüche 1 bis 4, **dadurch gekennzeichnet, dass** es die folgenden Schritte umfasst:
- Schritt 1: Hinzufügen von 8 bis 18g des Gels zu 1 kg Wasser unter Rühren, um ein Hydrogel zu erhalten;
- Schritt 2: Einspritzen des Hydrogels in einen Leckagebereich;
- Schritt 3: Einspritzen einer Distanzflüssigkeit in ein Bohrloch;
- Schritt 4: Einspritzen eines Schwerschlamms zum Totpumpen in das Bohrloch zum Umlauf-Bohrlochtotpumpen.

8. Verfahren zum Verschließen und Bohrlochtotpumpen unter Verwendung des Gels nach Anspruch 7, **dadurch gekennzeichnet, dass** es nach Schritt 4 ferner umfasst:
- Einspritzen eines schnell abbindenden Zements in das Bohrloch.

9. Verfahren zum Verschließen und Bohrlochtotpumpen unter Verwendung des Gels nach Anspruch 7, **dadurch gekennzeichnet, dass** in dem Schritt 2 die Einspritzrate des Hydrogels gleich oder größer als 4 m³/min ist.

10. Verfahren zum Verschließen und Bohrlochtotpumpen unter Verwendung des Gels nach Anspruch 7, **dadurch gekennzeichnet, dass** die Einspritzmenge des Schwerschlamms zum Totpumpen in Schritt 4 das 1,5- bis 2-fache des ringförmigen Volumens innerhalb des Bohrlochs beträgt.

## Revendications

1. Un gel **caractérisé en ce que** ce gel est formé par copolymérisation de plusieurs monomères hydrophobes, d'un monomère non-ionique et d'un monomère de sel d'acide oléfinique,
ce gel étant préparé par les étapes consistant à:
- ajouter tout d'abord de l'eau désionisée,
- ajouter les monomères hydrophobes et le monomère non-ionique sur la base d'un rapport d'alimentation,
- ajouter le monomère de sel d'acide oléfinique,
- agiter uniformément pour former un mélange à une concentration de 10% à 40% (10-40g/100mL),
- faire barboter de l'azote gazeux pour éliminer l'oxygène,
- contrôler le mélange jusqu'à une température de polymérisation,
- ajouter un initiateur pour procéder à la réaction de polymérisation,
- après une polymérisation pendant 6 à 12 heures, récupérer le colloïde pour granulation,
- continuer par addition d'un agent hydrolytique consistant en de l'hydroxyde de sodium ou du carbonate de sodium, pour l'hydrolyse,
- puis séchage, pulvérisation et conditionnement pour obtenir un échantillon de gel;
dans lequel gel:
les monomères hydrophobes consistent en chlorure d'alkyl diméthyl allyl ammonium ou N-alkyl acrylamide; le monomère non-ionique est un ou plusieurs acrylamide et méthacrylamide, et le monomère de sel d'acide oléfinique est un ou plusieurs parmi le méthacrylate de sodium, le vinylsulfonate de sodium et l'acrylate de sodium;
dans lequel gel:
le rapport monomères hydrophobes/monomère non-ionique/monomère de sel d'acide oléfinique est de 1-5 parties de monomères hydrophobes, de 70-90 parties de monomère non-ionique et 5-20 parties de monomère de sel de l'acide oléfinique par quantité de substance;
- la durée nécessaire pour faire barboter l'azote gazeux est de 40 à 120 min;
- la température de polymérisation est de 5-50°C;
- l'initiateur est un initiateur redox, dans lequel l'agent oxydant est un ou plusieurs parmi le persulfate de potassium, le persulfate d'ammonium et le persulfate de sodium; et l'agent réducteur est un ou plusieurs choisi parmi le sulfite de sodium, le bisulfite de sodium, l'urée et la triéthanolamine;
- l'initiateur est ajouté en une quantité de 0,05% à 2% de la masse totale formée par les monomères hydrophobes, le monomère non-ionique et le monomère de sel d'acide oléfinique;
- l'agent hydrolytique choisi parmi l'hydroxyde de sodium et le carbonate de sodium, est ajouté à raison de 5% à 15% de la masse totale formée par les monomères hydrophobes, le monomère non-ionique et le monomère de sel d'acide oléfinique;
- la température d'hydrolyse est de 80 à 110 °C et la durée d'hydrolyse est de 2 à 4 h;
- la température de séchage est de 80 à 120 °C et la durée de séchage est de 1 à 4 h.

2. Le gel selon la revendication 1, **caractérisé en ce que**
- le mélange présente une concentration de 20% à 30% (20-30g/100mL);
- la durée nécessaire pour faire barboter l'azote gazeux est de 60 à 100 min;
- la température de polymérisation est de 10-30°C; et la durée de polymérisation est de 8-10 h;
- l'initiateur est ajouté en une quantité de 0,1% à 0,5% de la masse totale formée par les monomères hydrophobes, le monomère non-ionique et le monomère de sel d'acide oléfinique;
- l'agent hydrolytique consistant en hydroxyde de sodium ou carbonate de sodium, est ajouté en une quantité de 8 à 12% de la masse totale formée par les monomères hydrophobes, le monomère non-ionique et le monomère de sel d'acide oléfinique;
- la température d'hydrolyse est comprise entre 90 et 95°C et la durée d'hydrolyse est comprise entre 2,5 et 3 h;
- la température de séchage est de 100-110°C et la durée de séchage est de 1,5-2 h.

3. Un gel **caractérisé en ce que** ce gel est formé par copolymérisation de plusieurs monomères hydrophobes, d'un monomère non-ionique et d'un monomère de sel d'acide oléfinique,
ce gel étant préparé par les étapes consistant à:
- ajouter tout d'abord de l'eau désionisée,
- ajouter les monomères hydrophobes et le monomère non-ionique sur la base d'un rapport d'alimentation,
- ajouter le monomère de sel d'acide oléfinique,
- agiter uniformément pour former un mélange à une concentration de 10% à 40% (10-40g/100mL),
- puis ajouter de l'hydroxyde de sodium ou du carbonate de sodium,
- et faire barboter de l'azote gazeux pour éliminer l'oxygène,
- contrôler le système de polymérisation jusqu'à une température de polymérisation,
- ajouter un initiateur pour procéder à la réaction de polymérisation,
- après 6 à 12 heures de polymérisation, récupérer le colloïde pour granulation,
- puis séchage, pulvérisation et conditionnement pour obtenir un échantillon de gel;
dans lequel gel:
- les monomères hydrophobes sont sélectionnés parmi le chlorure d'alkyl diméthyl allyl ammonium et le N-alkyl acrylamide;
- le monomère non-ionique est un ou plusieurs acrylamide ou méthacrylamide, et
- le monomère de sel d'acide oléfinique est un ou plusieurs des méthacrylate de sodium, vinylsulfonate de sodium et acrylate de sodium;
dans lequel gel:
- le rapport monomères hydrophobes/monomère non-ionique/monomère de sel d'acide oléfinique est de 1-5 parties de monomères hydrophobes, 70-90 parties de monomère non-ionique et 5-20 parties de monomère de sel de l'acide oléfinique par quantité de substance;
- la durée nécessaire pour faire barboter l'azote gazeux est de 40 à 120 min;
- la température de polymérisation est de 5-50°C;
- l'initiateur est un initiateur redox, dans lequel l'agent oxydant est un ou plusieurs parmi les persulfate de potassium, persulfate d'ammonium et persulfate de sodium, et l'agent réducteur est un ou plusieurs parmi les sulfite de sodium, bisulfite de sodium, urée et triéthanolamine;
- l'initiateur est ajouté en une quantité de 0,05% à 2% de la masse totale formée par les monomères hydrophobes, le monomère non-ionique et le monomère de sel d'acide oléfinique;
- la température de séchage est de 80 à 120°C et la durée de séchage est de 1 à 4 h.

4. Le gel selon la revendication 3, dans lequel
- le mélange a une concentration de 20% à 30% (20-30g/100mL);
- l'hydroxyde de sodium ou le carbonate de sodium est ajouté en une quantité de 8% à 12% de la masse totale des monomères hydrophobes, du monomère non-ionique et du monomère de sel d'acide oléfinique;
- la durée de barbotage de l'azote gazeux est de 60 à 100 min;
- la température de polymérisation est de 10-30°C; et la durée de polymérisation est de 8-10 h;
- l'initiateur est ajouté en une quantité de 0,1% à 0,5% de la masse totale de monomères hydrophobes, de monomère non-ionique et de monomère de sel d'acide oléfinique;
- la température de séchage est de 100-110°C et la durée de séchage est de 1,5-2 h.

5. Un procédé d'obturation utilisant le gel selon l'une quelconque des revendications 1 à 4, **caractérisé en ce qu'**il comprend les étapes suivantes:
- Étape A: additionner 8-18 g du gel dans 1 kg d'eau sous agitation, pour obtenir un hydrogel;
- Étape B: injecter l'hydrogel dans une zone de fuite;
- Étape C: injecter un fluide d'espacement dans un puits.

6. Le procédé d'obturation utilisant le gel selon la revendication 5, **caractérisé en ce que**, après l'étape C, il comprend en outre: l'injection d'un ciment à prise rapide dans le puits.

7. Un procédé d'obturation et de destruction de puits à l'aide du gel selon l'une quelconque des revendications 1 à 4, **caractérisé en ce qu'**il comprend les étapes suivantes:
- Étape 1: ajouter 8-18 g du gel dans 1 kg d'eau sous agitation, pour obtenir un hydrogel;
- Étape 2: injecter l'hydrogel dans une zone de fuite;
- Étape 3: injection d'un fluide d'espacement dans un puits;
- Étape 4: injecter une boue épaisse dans le puits pour le détruire par sa circulation.

8. Le procédé d'obturation et de destruction de puits à l'aide du gel selon la revendication 7, **caractérisé en ce que**, après l'étape 4, il comprend en outre: l'injection d'un ciment à prise rapide dans le puits.

9. Le procédé d'obturation et de destruction de puits à l'aide du gel selon la revendication 7, **caractérisé en ce que**, dans l'étape 2, le débit d'injection de l'hydrogel est égal ou supérieur à 4 m³/min.

10. Le procédé d'obturation et de destruction de puits en utilisant le gel selon la revendication 7, **caractérisé en ce que** la quantité d'injection de la boue lourde destinée à la destruction de l'étape 4 est égale à 1,5 à 2 fois le volume annulaire à l'intérieur du puits.
